Europäisches Patentamt

European Patent Office

Office européen des brevets

(19)

(11) Veroffentlichungsnummer: **0 019 030**
**A1**

(12) # EUROPÄISCHE PATENTANMELDUNG

(21) Anmeldenummer: **80100121.5**

(22) Anmeldetag. **11.01.80**

(51) Int. Cl.³: **B 65 G 47/90**

(30) Priorität: **28.04.79 DE 2917434**

(43) Veröffentlichungstag der Anmeldung:
**26.11.80 Patentblatt 80·24**

(84) Benannte Vertragsstaaten:
**BE CH FR GB NL**

(71) Anmelder: **C. KELLER GMBH u. Co. KG.**
**Carl-Keller-Strasse 2-10**
**D-4530 Ibbenbüren 2(DE)**

(72) Erfinder: **Bracht, Manfred**
**Annenstrasse 18**
**D-4441 Spelle(DE)**

(54) **Einrichtung zum Gruppieren und Umladen von in einer Längsreihe gegen einen Anschlag laufenden Ziegelformlingen.**

(57) Bei einer Einrichtung zum Gruppieren und Umladen von in einer Kängsreihe gegen einen Anschlag (3) laufenden Ziegelformlingen (1) ist ein die Ziegelformlinge (1) herantransportiertes Förderband (2) und eine die gruppierten Ziegelformlinge (1) vom Förderband (2) abtransportierende Greifervorrichtung (6) angeordnet.

Der Anschlag (3) ist dabei an der Greifervorrichtung (6) im Bereich von an der Greifervorrichtung (6) angeordneten Greiferleisten (8) befestigt. die die Ziegelformlinge (1) nach Betätigung des Anschlages (3) an den Kopfseiten ergreifen, vom Förderband (2) abheben und auf eine Setzstelle absetzen, wo nach Wiederholter Zufuhr von Ziegelformlingen (1) durch die Greifervorrichtung (6) eine Setzlage gebildet wird.

Fig ·

EP 0 019 030 A1

- 1 -

C. KELLER GMBH u. CO.KG
Carl-Keller-Straße 2-10
D-4530   Ibbenbüren   2

Einrichtung zum Gruppieren und Umladen von in einer
Längsreihe gegen einen Anschlag laufenden Ziegelformlingen

Die Erfindung betrifft eine Einrichtung zum Gruppieren und Umladen von in einer Längsreihe gegen einen Anschlag laufenden Ziegelformlingen, mit einem die Ziegelformlinge herantransportierenden Förderband und einer die gruppierten Ziegelformlinge vom Förderband abtransportierenden Umladevorrichtung.

Bei einer bekannten Einrichtung (Gb-PS 13 33 525) gemäß Oberbegriff des Patentanspruchs 1 werden die Ziegelformlinge in einer Längsreihe dicht aneinanderliegend auf einem Förderband gegen einen Anschlag befördert, der verstellbar ausgebildet ist, und vor dem sich eine Längsreihe der gewünschten Größe ansammelt. Sobald dies geschehen ist, wird das Förderband angehalten und es erfolgt das Zurückfahren des Anschlages in die gesammelte Formlings-Längsreihe quer zur bisherigen Förderrichtung vom Förderband auf eine Plattform oder einen Förderer abschiebt, wodurch wiederholtes Abschieben mehrere Formlings-Längsreihen zu einer Lage gesammelt werden.

- 2 -

Von Nachteil ist hierbei, daß vor Ausführung des Abschiebevorganges der Anschlag in die Außerbetriebstellung gefahren und das Förderband angehalten werden muß. Hiernach kann erst der Abschiebevorgang erfolgen. Erst nach Beendigung des Abschiebevorganges kann dann der Anschlag in die Betriebsstellung geführt und das Förderband zwecks Aufreihung einer neuen Formlings-Längsreihe erneut in Gang gesetzt werden. Für alle diese Bewegungsabläufe ist ein bestimmter Zeitbedarf erforderlich, was eine Zeitverzögerung beim Gruppieren der Formlings-Längsreihe zur Folge hat. Die Leistung ist also verhältnismäßig gering.

Darüber hinaus ist der Betrieb der bekannten Einrichtung wegen des Taktbetriebes und der Abschubweise der Ziegelformlinge vom Förderband mit relativ großen Wartungskosten verbunden, da der Materialverschleiß erheblich ist.

Außerdem können Störungen im Funktionsablauf durch Maßungenauigkeiten der Ziegelformlinge auftreten, und zwar dann, wenn sich ein zum Abschub vorgesehener Ziegelformling zwischen Abschieber und seitlich des Förderbandes angebrachten Haltebleche festklemmt.

Hier will die Erfindung Abhilfe schaffen. Die Erfindung, wie sie in den Ansprüchen gekennzeichnet ist, löst die Aufgabe, eine Einrichtung der eingangs genannten Art zu schaffen, die eine Störung des Funktionsablaufes bei Maßungenauigkeiten der Ziegelformlinge vermeidet und einen zügigen und raschen Arbeitsablauf und damit eine hohe Produktionsleistung ermöglicht.

Die durch die Erfindung erreichten Vorteile sind im wesentlichen darin zu sehen, daß eine besonders hohe Leistung erreicht wird, da das Umladen der auf dem Förderband gruppierten Ziegelformlinge bei kontinuierlich laufendem Förderband vor sich geht und durch eine Greifervorrichtung vorgenommen wird, so daß kein Verschieben der Ziegelformlinge auf dem Förderband erfolgt und der Verschleiß niedrig gehalten wird. Die Wartungskosten sind also geringer.

Störungen im Funktionsablauf können nicht auftreten, da keine die Ziegelformlinge abklemmenden Teile vorhanden sind.

Da die Ziegelformlinge vom Förderband abgehoben werden, treten keine durch ein Verschieben bedingte Beschädigungen an den Ziegelformlingen auf.

Im folgenden wird die Erfindung anhand von lediglich einen Ausführungsweg darstellenden Zeichnungen näher erläutert. Es zeigt

Fig. 1 eine Seitenansicht der Einrichtung und

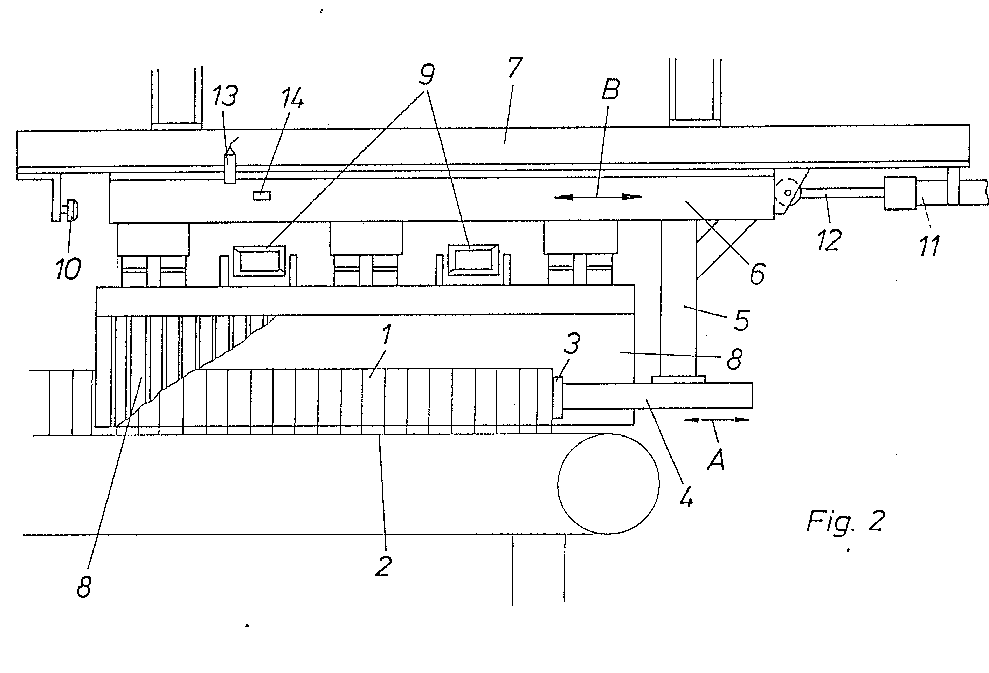

Fig. 2 eine weitere Seitenansicht der Einrichtung in einer anderen Betriebsstellung.

Ziegelsteine bzw. Ziegelformlinge 1 werden in einer Längsreihe dicht aneinanderliegend von einem Förderband 2 herantransportiert und gegen einen Anschlag 3 geführt.

Der Anschlag 3 ist an einer in Richtung des Doppelpfeiles A bewegbaren Verstellführung 4 befestigt, die über eine Halterung 5 an einem Greiferschlitten 6 einer Greifervorrichtung G angeordnet ist.

Der Greiferschlitten 6 ist in Richtung des Doppelpfeils B bewegbar an einem Greiferrahmen 7 angeordnet, der heb- und senkbar und seitlich verfahrbar ausgebildet ist.

Am Greiferschlitten 6 sind Greiferleisten 8 angebracht, die sich seitlich der Längsreihe der Ziegelformlinge 1 befinden und die mittels Greiferzylinder 9 so aufeinander zubewegt werden, daß sie die Ziegelformlinge 1 an den Kopfseiten erfassen.

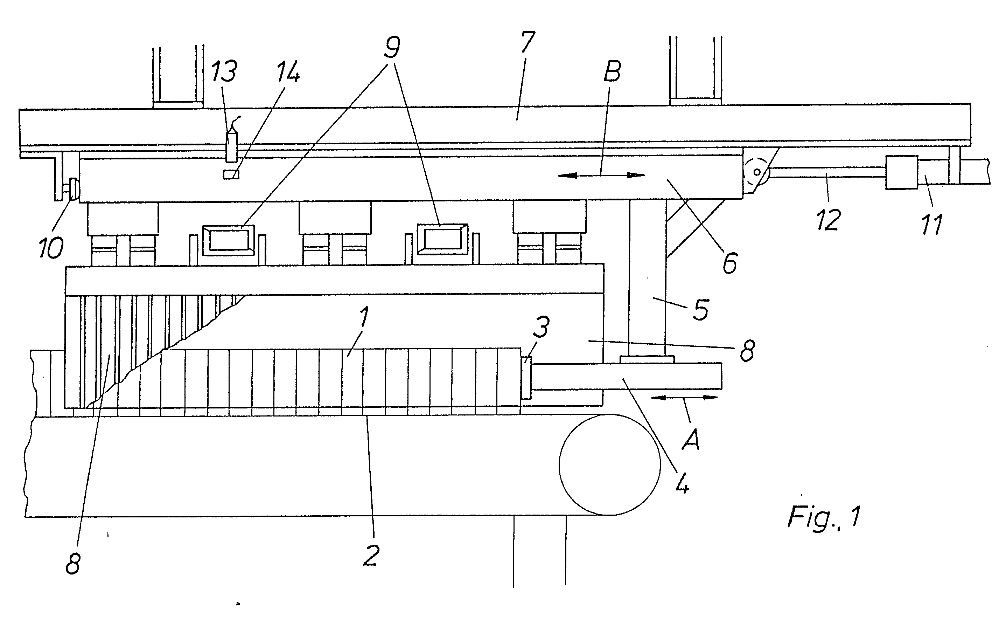

Am Greiferrahmen 7 ist ein Begrenzungspuffer 10 befestigt, der die Fahrbewegung des Greiferschlittens 6 begrenzt und an welchem der Greiferschlitten 6 zu Beginn der Funktionsablaufes anliegt (Fig. 1).

Weiterhin ist am Greiferrahmen 7 eine Kolben-Zylinder-Einheit 11 angebracht, deren Kolbenstange 12 mit dem Greiferschlitten 6 in Verbindung steht. Die Kolben-Zylinder-Einheit 11 ist einstellbar und begrenzt zur anderen Seite den Fahrweg des Greiferschlittens 6 und führt diesen während des Funktionsablaufes in die Ausgangslage zur Anlage an den Betrenzungspuffer lo zurück.

Am Greiferrahmen 7 ist außerdem ein Endschalter (berührungsloser Näherungsschalter) 13 befestigt, der auf einen am Greiferschlitten 6 befestigten Schalternocken 14 anspricht und mit diesem zusammenwirkt.

Der Anschlag 3 kann mittels der Verstellführung 4 so in Richtung des Doppelpfeils A verstellt werden, daß eine bestimmte bzw. gewünschte Anzahl Ziegelformlinge 1 von den Greiferleisten 8 ergriffen werden.

- 5 -

Sobald die Ziegelformlinge 1 den Anschlag 3 erreicht haben, wird dieser und damit auch der Greiferschlitten 6 in Richtung des rechten Doppelpfeils B vom Begrenzungspuffer 10 wegbewegt. Die Kolben-Zylinder-Einheit 11 kann so eingestellt werden, daß der Fahrweg nach einer gewissen Strecke begrenzt wird.

Sobald der Schalternocken 14 der am Greiferschlitten 11 befestigt ist, aus dem Bereich des Endschalters 13 herausbewegt ist, schaltet der Endschalter 13 die Greifervorrichtung G ein. Die Greiferschlitten 8 bewegen sich dann während der Fahrbewegung des Greiferschlittens 6 aufeinander zu, ergreifen die Längsreihe Ziegelformlinge 1, heben diese von dem Förderband 2, welches kontinuierlich weiterläuft, ab und setzen die Ziegelformlinge 1 auf eine Setzstelle (nicht dargestellt) ab, wo nach wiederholter Zufuhr von Ziegelformlingen 1 eine Lage (nicht dargestellt) gebildet wird. Während dieses Umladevorganges führt die Kolben-Zylinder-Einheit 11 den Greiferschlitten 6 in die Ausgangslage zur Anlage an den Begrenzungspuffer 10 zurück und das Förderband 2 befördert die Ziegelformlinge 1 kontinuierlich weiter.

Die erfindungsgemäße Einrichtung kann nicht nur für Ziegelformlinge, die getrocknet aus der Trocknerei kommen, Verwendung finden, sondern auch für Ziegelsteine, die gebrannt aus dem Tunnelofen herangeführt werden.

- 1 -

Patentansprüche:

1. Einrichtung zum Gruppieren und Umladen von in einer Längsreihe gegen einen Anschlag (3) laufenden Ziegelformlingen (1), mit einem die Ziegelformlinge (1) herantransportierenden Förderband (2) und einer die gruppierten Ziegelformlinge (1) vom Förderband (2) abtransportierenden Umladevorrichtung, dadurch gekennzeichnet, daß die Umladevorrichtung eine Greifervorrichtung (G) ist, die die Ziegelformlinge (1) mittels Greiferleisten (8) an den Kopfseiten erfaßt, daß der Anschlag (3) an der Greifervorrichtung (G) im Bereich der Greiferleisten (8) angeordnet ist.

2. Einrichtung nach Anspruch 1, dadurch gekennzeichnet, daß der Anschlag (3) über eine waagerechte Verstellführung (4) und einer senkrechten Halterung (5) an einem die Greiferleisten (8) tragenden, auf einen Greiferrahmen (7) verschiebbaren Greifer- schlitten (6) befestigt ist.

3. Einrichtung nach Anspruch 2, dadurch gekennzeichnet, daß der Anschlag (3) mittels der Verstellführung (4) auf verschiedene Längsreihenlängen waagerecht verstellbar ist.

4. Einrichtung nach einem der Ansprüche 1 - 3, dadurch gekennzeichnet, daß ein am Greiferrahmen (7) angeordneter Endschalter (13) und ein am Greiferschlitten (6) angeordneter Schalternocken (14) zusammenwirken, derart, daß beim Verschieben des Greiferschlittens (6) aus der Zusammenwirkstellung die Greifervor- richtung (G) betätigbar ist.

Fig. 1

Fig. 2

Europäisches
Patentamt

**EUROPÄISCHER RECHERCHENBERICHT**

Nummer der Anmeldung

EP 80 10 0121

| orie | EINSCHLÄGIGE DOKUMENTE | | KLASSIFIKATION DER ANMELDUNG (Int Cl 3) |
|---|---|---|---|
| | Kennzeichnung des Dokuments mit Angabe soweit erforderlich der maßgeblichen Teile | betrifft Anspruch | |
| | <u>US - A - 3 834 117</u> (GIFT)<br> * Spalte 2, Zeilen 28-51; Spalte 3, Zeilen 5-24; Figuren *<br><br>-- | 1,4 | B 65 G 47/90 |
| | <u>FR - A - 1 306 294</u> (T & T VICARS <u>LTD.</u>)<br> * Seite 2, Spalte 1, Zeile 29 bis Spalte 2, Zeile 35; Figuren *<br><br>-- | 1-3 | |
| | <u>FR - A - 1 355 294</u> (MOSKOPF)<br> * Zusammenfassung; Figuren *<br><br>-- | 2 | RECHERCHIERTE SACHGEBIETE (Int Cl 3)<br><br>B 65 G 47/90<br>B 65 B 35/36<br>B 65 G 49/00<br>47/08 |
| | <u>GB - A - 1 222 652</u> (DUNCAN <u>STEWART</u>)<br> * Seite 5, Zeilen 22-27; Figuren *<br><br>-- | 1 | |
| | <u>FR - A - 1 517 642</u> (FORMICA INT. <u>LTD.</u>)<br> * Seite 3, Spalte 1, Zeile 61 bis Spalte 2, Zeile 10; Figuren *<br><br>-- | 1,2,4 | |
| | <u>GB - A - 1 333 525</u> (FORREST <u>PASCAL</u>)<br><br>---- | 1 | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

| Der vorliegende Recherchenbericht wurde für alle Patentansprüche erstellt. | | |
|---|---|---|
| Recherchenort<br>**Den Haag** | Abschlußdatum der Recherche<br>**21-07-1980** | Prüfer<br>**V. ROLLEGHEM** |

Form 1503.1 06.78